# EUROPEAN PATENT SPECIFICATION

(11) **EP 4 383 769 B1**
(45) Date of publication and mention of the grant of the patent: **03.09.2025**
(21) Application number: 22887533.2
(22) Date of filing: 24.10.2022
(51) Int. Cl.: H04W 8/00, H04W 4/80, H04L 12/28, G16Y 10/80, G16Y 40/30, H04L 69/18

(54) **ELECTRONIC DEVICE COMMUNICATING WITH EXTERNAL ELECTRONIC DEVICE AND OPERATION METHOD THEREOF**
ELEKTRONISCHE VORRICHTUNG ZUR KOMMUNIKATION MIT EINER EXTERNEN ELEKTRONISCHEN VORRICHTUNG UND BETRIEBSVERFAHREN DAFÜR
DISPOSITIF ÉLECTRONIQUE COMMUNIQUANT AVEC UN DISPOSITIF ÉLECTRONIQUE EXTERNE ET SON PROCÉDÉ DE FONCTIONNEMENT

(30) Priority: 25.10.2021 KR 20210142861
(43) Date of publication of application: 12.06.2024
(73) Proprietor: Samsung Electronics Co., Ltd., Suwon-si, Gyeonggi-do 16677 (KR)
(72) Inventor: LEE, Seungcheol, Suwon-si Gyeonggi-do 16677 (KR); KANG, Byungsung, Suwon-si Gyeonggi-do 16677 (KR); CHOI, Kyoungho, Suwon-si Gyeonggi-do 16677 (KR); HAM, Dongeup, Suwon-si Gyeonggi-do 16677 (KR); PARK, Sewook, Suwon-si Gyeonggi-do 16677 (KR); PARK, Chanyeol, Suwon-si Gyeonggi-do 16677 (KR); LEE, Dongkyu, Suwon-si Gyeonggi-do 16677 (KR); LIM, Dongsun, Suwon-si Gyeonggi-do 16677 (KR); JOUNG, Suengyoon, Suwon-si Gyeonggi-do 16677 (KR)
(74) Representative: Gulde & Partner
(86) International application number: PCT/KR2022/016285
(87) International publication number: WO 2023/075337

(56) References cited:
- KR-A- 20140 135 569
- KR-A- 20200 048 821
- KR-A- 20210 111 539
- KR-B1- 101 662 396
- KR-B1- 101 761 501
- US-A1- 2014 010 089
- US-A1- 2019 208 399
- CHEN BO-REN ET AL: "Energy-Efficient BLE Device Discovery for Internet of Things", 2017 FIFTH INTERNATIONAL SYMPOSIUM ON COMPUTING AND NETWORKING (CANDAR), IEEE, 19 November 2017 (2017-11-19), pages 75 - 79, XP033335400, DOI: 10.1109/CANDAR.2017.95

## Description

### [Technical Field]

The disclosure relates to an electronic device communicating with an external electronic device and a method for operating the same.

### [Background Art]

The Internet of Things (IoT) refers to technology for accessing the Internet by equipping various things with sensors and communication functionality.

IoT is an artificial intelligence technology capable of exchanging data between things connected via the Internet, self-analyzing the data, providing learned information to the user or allowing the user to remotely control them. Here, the things may be various embedded systems, e.g., home appliances, mobile devices, or wearable devices. IoT-connected things may connect to the Internet using their own unique internet protocol (IP) addresses for distinguishing them from others and may have sensors for obtaining data from an external environment.

IoT is also highly useful for the purpose of controlling various electronic devices in the home. The user may control electronic devices, such as a TV, a washing machine, or an air conditioner, to perform their respective specialized services in the home IoT environment and may easily share information thereabout.

A publication of KR 2020 0048821 A concerns setting up a scanning procedure for multiple communication protocols.

### [Disclosure]

### [Technical Problem]

In a discovery procedure of an Internet of Things (IoT) system, the electronic device may have difficulty in scanning an external electronic device desired by the user due to duplication of scan resources or ambient environment.

Aspect of the disclosure, an electronic device may determine a scan target considering the influence by the ambient environment or duplication of scan resources and scan an external electronic device desired by the user.

Aspect of the disclosure, an electronic device may identify a communication protocol supported by an external electronic device registered in the user account and scan an external electronic device desired by the user.

Additional aspects will be set forth in part in the description which follows and, in part, will be apparent from the description, or may be learned by practice of the presented embodiments.

### [Technical Solution]

In accordance with an aspect of the disclosure, an electronic device is provided as defined in the appended claims.

In accordance with another aspect of the disclosure, a method for operating an electronic device scanning an external electronic device is provided as defined in the appended claims.

### [Advantageous Effects]

According to embodiment of the disclosure, in an Internet of things (IoT) system, an electronic device may prevent unnecessary waste of scan resources during a discovery operation and efficiently set a scan target, thereby enhancing the scan performance of the electronic device.

According to embodiments of the disclosure, in an IoT system, an electronic device may efficiently set a scan target considering the characteristics of an external electronic device and scan an external electronic device desired by the user.

Other aspects, advantages, and salient features of the disclosure will become apparent to those skilled in the art from the following detailed description, which, taken in conjunction with the annexed drawings, disclose embodiments of the disclosure.

### [Description of the Drawings]

The above and other aspects, features, and advantages of certain embodiments of the disclosure will be more apparent from the following description taken in conjunction with the accompanying drawings, in which:
FIG. 1 is a block diagram illustrating an electronic device in a network environment according to an embodiment of the disclosure;
FIG. 2 is a block diagram illustrating a program according to an embodiment of the disclosure;
FIG. 3 is a view illustrating an IoT environment according to an embodiment of the disclosure;
FIG. 4 is a view illustrating an IoT environment according to an embodiment of the disclosure;
FIG. 5 is a view illustrating a system architecture according to an embodiment of the disclosure;
FIG. 6 is a view illustrating a system architecture according to an embodiment of the disclosure;
FIG. 7 is a view illustrating an electronic device scanning an external electronic device according to an embodiment of the disclosure;
FIG. 8 is a view illustrating a discovery flow of an electronic device according to an embodiment of the disclosure;
FIG. 9 is a view illustrating a user interface of an electronic device according to an embodiment of the disclosure;
FIG. 10 is a view illustrating a user interface of an electronic device according to an embodiment of the disclosure;
FIG. 11 is a view illustrating an operation method of an electronic device according to an embodiment of the disclosure;
FIG. 12 is a view illustrating an operation method of an electronic device according to an embodiment of the disclosure;
FIG. 13 is a view illustrating an operation method of an electronic device according to an embodiment of the disclosure; and
FIG. 14 is a view illustrating an operation method of an electronic device according to an embodiment of the disclosure.

Throughout the drawings, it should be noted that like reference numbers are used to depict the same or similar elements, features, and structures.

### [Mode for Invention]

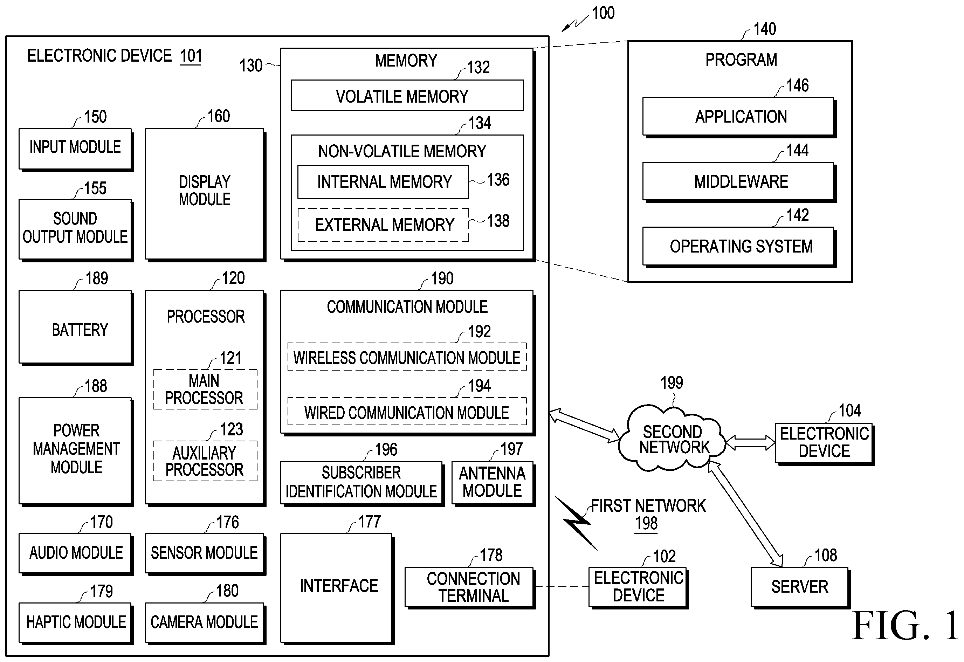

FIG. 1 is a block diagram illustrating an electronic device in a network environment according to an embodiment of the disclosure. Referring to FIG. 1, an electronic device 101 in a network environment 100 may communicate with at least one of an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, a memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one (e.g., the connecting terminal 178) of the components may be omitted from the electronic device 101, or one or more other components may be added in the electronic device 101. According to an embodiment, some (e.g., the sensor module 176, the camera module 180, or the antenna module 197) of the components may be integrated into a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in a volatile memory 132, process the command or the data stored in the volatile memory 132, and store resulting data in a non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be configured to use lower power than the main processor 121 or to be specified for a designated function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. The artificial intelligence model may be generated via machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by other component (e.g., the processor 120) of the electronic device 101, from the outside (e.g., a user) of the electronic device 101. The input module 150 may include, for example, a microphone, a mouse, a keyboard, keys (e.g., buttons), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor configured to detect a touch, or a pressure sensor configured to measure the intensity of a force generated by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, an SD card connector, or an audio connector (e.g., a headphone connector).

The haptic module 179 may convert an electrical signal into a mechanical stimulus (e.g., a vibration or motion) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device 104 via a first network 198 (e.g., a short-range communication network, such as Bluetooth^{™}, wireless-fidelity (Wi-Fi) direct, or infrared data association (IrDA)) or a second network 199 (e.g., a long-range communication network, such as a legacy cellular network, a 5G network, a next-generation communication network, the Internet, or a computer network (e.g., local area network (LAN) or wide area network (WAN)). These various types of communication modules may be implemented as a single component (e.g., a single chip), or may be implemented as multi components (e.g., multi chips) separate from each other. The wireless communication module 192 may identify or authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device). According to an embodiment, the antenna module 197 may include one antenna including a radiator formed of a conductor or conductive pattern formed on a substrate (e.g., a printed circuit board (PCB)). According to an embodiment, the antenna module 197 may include a plurality of antennas (e.g., an antenna array). In this case, at least one antenna appropriate for a communication scheme used in a communication network, such as the first network 198 or the second network 199, may be selected from the plurality of antennas by, e.g., the communication module 190. The signal or the power may then be transmitted or received between the communication module 190 and the external electronic device via the selected at least one antenna. According to an embodiment, other parts (e.g., radio frequency integrated circuit (RFIC)) than the radiator may be further formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adj acent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. The external electronic devices 102 or 104 each may be a device of the same or a different type from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an Internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or health-care) based on 5G communication technology or IoT-related technology.

The electronic device according to various embodiments of the disclosure may be one of various types of electronic devices. The electronic devices may include, for example, a portable communication device (e.g., a smart phone), a computer device, a portable multimedia device, a portable medical device, a camera, a wearable device, or a home appliance. According to an embodiment of the disclosure, the electronic devices are not limited to those described above.

With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., an internal memory 136 or an external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program products may be traded as commodities between sellers and buyers. The computer program product may be distributed in the form of a machine-readable storage medium (e.g., a compact disc read only memory (CD-ROM)), or be distributed (e.g., downloaded or uploaded) online via an application store (e.g., Play Store^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. Some of the plurality of entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

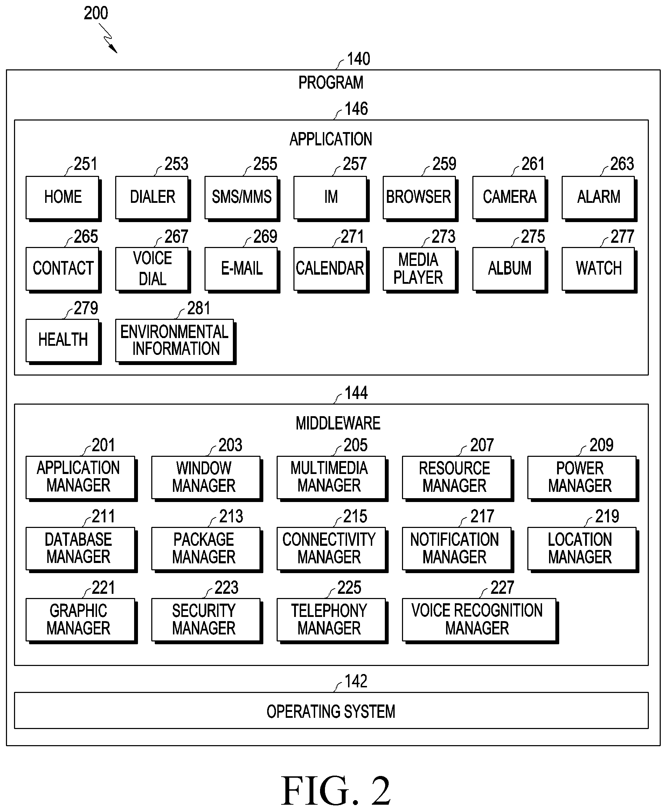

FIG. 2 is a block diagram 200 illustrating a program according to an embodiment of the disclosure.

Referring to FIG. 2, the program 140 may include an operating system (OS) 142 to control one or more resources of the electronic device 101, middleware 144, or an application 146 executable in the OS 142. The OS 142 may include, for example, Android^{™}, iOS^{™}, Windows^{™}, Symbian^{™}, Tizen^{™}, or Bada^{™}. At least part of the program 140, for example, may be pre-loaded on the electronic device 101 during manufacture, or may be downloaded from or updated by an external electronic device (e.g., the electronic device 102 or 104, or the server 108) during use by a user.

The OS 142 may control management (e.g., allocating or deallocation) of one or more system resources (e.g., process, memory, or power source) of the electronic device 101. The OS 142, additionally or alternatively, may include one or more driver programs to drive other hardware devices of the electronic device 101, for example, the input module 150, the sound output module 155, the display module 160, the audio module 170, the sensor module 176, the interface 177, the haptic module 179, the camera module 180, the power management module 188, the battery 189, the communication module 190, the subscriber identification module 196, or the antenna module 197.

The middleware 144 may provide various functions to the application 146 such that a function or information provided from one or more resources of the electronic device 101 may be used by the application 146. The middleware 144 may include, for example, an application manager 201, a window manager 203, a multimedia manager 205, a resource manager 207, a power manager 209, a database manager 211, a package manager 213, a connectivity manager 215, a notification manager 217, a location manager 219, a graphic manager 221, a security manager 223, a telephony manager 225, or a voice recognition manager 227.

The application manager 201, for example, may manage the life cycle of the application 146. The window manager 203, for example, may manage one or more graphical user interface (GUI) resources that are used on a screen. The multimedia manager 205, for example, may identify one or more formats to be used to play media files, and may encode or decode a corresponding one of the media files using a codec appropriate for a corresponding format selected from the one or more formats. The resource manager 207, for example, may manage the source code of the application 146 or a memory space of the memory 130. The power manager 209, for example, may manage the capacity, temperature, or power of the battery 189, and determine or provide related information to be used for the operation of the electronic device 101 based at least in part on corresponding information of the capacity, temperature, or power of the battery 189. According to an embodiment, the power manager 209 may interwork with a basic input/output system (BIOS) (not shown) of the electronic device 101.

The database manager 211, for example, may generate, search, or change a database to be used by the application 146. The package manager 213, for example, may manage installation or update of an application that is distributed in the form of a package file. The connectivity manager 215, for example, may manage a wireless connection or a direct connection between the electronic device 101 and the external electronic device. The notification manager 217, for example, may provide a function to notify a user of an occurrence of a specified event (e.g., an incoming call, message, or alert). The location manager 219, for example, may manage locational information on the electronic device 101. The graphic manager 221, for example, may manage one or more graphic effects to be offered to a user or a user interface related to the one or more graphic effects.

The security manager 223, for example, may provide system security or user authentication. The telephony manager 225, for example, may manage a voice call function or a video call function provided by the electronic device 101. The voice recognition manager 227, for example, may transmit a user's voice data to the server 108, and receive, from the server 108, a command corresponding to a function to be executed on the electronic device 101 based at least in part on the voice data, or text data converted based at least in part on the voice data. According to an embodiment, the middleware 244 may dynamically delete some existing components or add new components. According to an embodiment, at least part of the middleware 144 may be included as part of the OS 142 or may be implemented as another software separate from the OS 142.

The application 146 may include, for example, a home 251, a dialer 253, a short message service (SMS)/multimedia messaging service (MMS) 255, an instant message (IM) 257, a browser 259, a camera 261, an alarm 263, a contact 265, a voice recognition 267, an email 269, a calendar 271, a media player 273, an album 275, a watch 277, health 279 (e.g., for measuring the degree of workout or biometric information, such as blood sugar), or environmental information 281 (e.g., for measuring air pressure, humidity, or temperature information) application. According to an embodiment, the application 146 may further include an information exchanging application (not shown) that is capable of supporting information exchange between the electronic device 101 and the external electronic device. The information exchange application, for example, may include a notification relay application adapted to transfer designated information (e.g., a call, message, or alert) to the external electronic device or a device management application adapted to manage the external electronic device. The notification relay application may transfer notification information corresponding to an occurrence of a specified event (e.g., receipt of an email) at another application (e.g., the email application 269) of the electronic device 101 to the external electronic device. Additionally or alternatively, the notification relay application may receive notification information from the external electronic device and provide the notification information to a user of the electronic device 101.

The device management application may control the power (e.g., turn-on or turn-off) or the function (e.g., brightness, resolution, or focus) of the external electronic device or some component thereof (e.g., a display module or a camera module of the external electronic device). The device management application, additionally or alternatively, may support installation, delete, or update of an application running on the external electronic device.

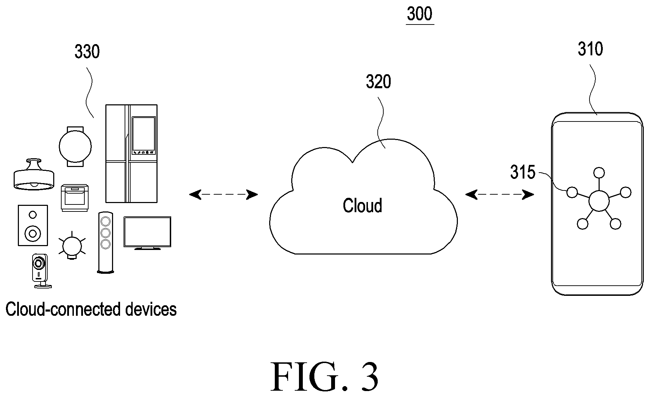

FIG. 3 is a view illustrating an IoT environment according to an embodiment of the disclosure.

Referring to FIG. 3, an IoT environment 300 may include an electronic device 310, a cloud 320, and cloud-connected devices 330. According to various embodiments, the IoT environment 300 may mean a type of platform that connects cloud-connected devices 300, e.g., home appliances, via various types of communication networks and relays and controls them by a local server. According to various embodiments, the IoT environment 300 may provide device search and control while controlling various communication protocols, such as Bluetooth (BT), Bluetooth low energy (BLE), Wi-Fi, peer-to-peer (P2P) network, universal plug and play (UPnP), Cloud, or ultra-wideband (UWB). According to various embodiments, the IoT environment 300 may be implemented as an open platform to be able to connect not only a specific brand of sensor or product but also other brands of products. According to various embodiments, the IoT environment 300 may be implemented as a closed platform to be able to connect a specific brand of sensor and product.

According to various embodiments, an application 315 (e.g., the application 146 of FIG. 1) executable by an operating system (e.g., the operating system 142 of FIG. 1) may be installed on the electronic device 310 (e.g., the electronic device 101 of FIG. 1). According to various embodiments, the application 315 may be preloaded on the electronic device 310 when manufactured or be downloaded from an external electronic device(e.g., the electronic device 102 or 104 of FIG. 1 or the server 108 of FIG. 1) or updated. According to various embodiments, the application 315 may identify the state of the cloud-connected devices 330 registered with the server in the cloud 320 and control the cloud-connected devices 330. According to various embodiments, the application 315 may control the cloud-connected devices 330 registered with the server in the cloud 320 to be automatically operated at a predetermined time or receive notifications from the cloud-connected devices 330. According to various embodiments, the application 315 may control and manage smart home appliances or Internet of Things (IoT) through the electronic device 310 and wiredly or wirelessly connect with nearby devices. For example, the cloud-connected devices 330 may include at least one of TVs, speakers, refrigerators, kimchi refrigerators, wine cellars, washers, driers, air dressers, ovens, dish washers, cooktops, robot vacuums, air conditioners, and air purifiers.

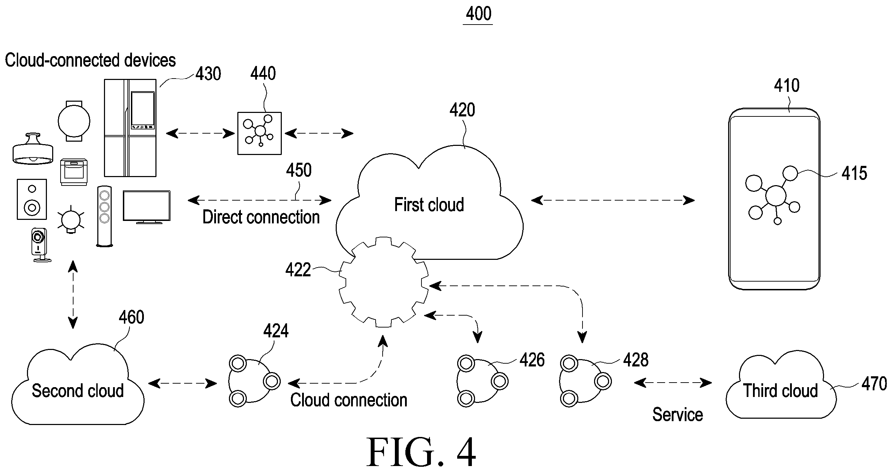

FIG. 4 is a view illustrating an IoT environment according to an embodiment of the disclosure.

Referring to FIG. 4, an IoT environment 400 may include an electronic device 410, a first cloud 420, cloud-connected devices 430 (e.g., the cloud-connected devices 330 of FIG. 3), a hub 440, a second cloud 460, and a third cloud 470. According to various embodiments, the IoT environment 400 may provide substantially the same or similar environment to the IoT environment 300 described in connection with FIG. 3. According to various embodiments, an application 415 (e.g., the application 146 of FIG. 1) executable by an operating system (e.g., the operating system 142 of FIG. 1) may be installed on the electronic device 410 (e.g., the electronic device 101 of FIG. 1). According to various embodiments, the application 415 may identify the state of the cloud-connected devices 430 registered with the server in the first cloud 420 and control the cloud-connected devices 430. According to various embodiments, the application 415 may control the cloud-connected devices 430 registered with the server in the first cloud 420 to be automatically operated at a predetermined time or receive notifications from the cloud-connected devices 430. According to various embodiments, the application 415 may control and manage smart home appliances or Internet of Things (IoT) through the electronic device 310 and wiredly or wirelessly connect with nearby devices.

According to various embodiments, the first cloud 420 may include a server that manages or controls the electronic device 410 and the cloud-connected devices 430. According to various embodiments, the server in the first cloud 420 may store information transmitted/received between the electronic device 410 and the cloud-connected devices 430, relay communication between the electronic device 410 and the cloud-connected devices 430, and support communication of the electronic device 410 and the cloud-connected devices 430. According to various embodiments, the first cloud 420 may implement an application programming interface (API) which is a language or message format used for communication between operating system and application program. According to various embodiments, the first cloud 420 may be connected with the cloud-connected devices 430 via the hub 440. According to various embodiments, the hub 440 may mean a device (e.g., gateway) that relays communication between the first cloud 420 and the cloud-connected devices 430. According to various embodiments, the hub 440 may be a device implemented in the first cloud 420 or implemented as a separate device (e.g., external server). According to various embodiments, the first cloud 420 may be connected with the cloud-connected devices 430 via a direct connection 450 without using the hub 440.

According to various embodiments, the first cloud 420 may be connected with a cloud connector 424 using an API 422 and communicate with the second cloud 460. According to various embodiments, the operator who provides service on the first cloud 420 may differ from the operator who provides service on the second cloud 460. According to various embodiments, the cloud connector 424 may relay communication between different clouds (e.g., the first cloud 420 and the second cloud 460). According to various embodiments, the cloud connector 424 may be a hardware device or software module implemented in the first cloud 420. According to various embodiments, the cloud connector 424 may be a hardware device or software module implemented outside the first cloud 420. According to various embodiments, the cloud connector 424 may be a separate server implemented outside the first cloud 420.

According to various embodiments, the first cloud 420 may be connected with an automation function 426 using the API 422. The automation function 426 may control each of the cloud-connected devices 430 connected to the first cloud 420 to perform its pre-defined operation without a user command (or input) if a condition set in the application 415 by the user is met. According to various embodiments, the automation function 426 may be a hardware device or software module implemented in the first cloud 420. According to various embodiments, the automation function 426 may be a hardware device or software module implemented outside the first cloud 420. According to various embodiments, the automation function 426 may be a separate server implemented outside the first cloud 420. According to various embodiments, in response to a user input, the application 415 may set various conditions, e.g., time (e.g., specific time, specific time period, always, or day), device state, member location (e.g., check on whether it is in the initially set place), place state, or weather. According to various embodiments, if the condition set by the application 415 is met, the automation function 426 may control each of the cloud-connected devices 430 connected to the first cloud 420 to perform functions, e.g., device control, smartphone notification, play voice messages through speaker, place state change, or mode execution.

According to various embodiments, the first cloud 420 may be connected with a cloud connector 428 using the API 422 and communicate with the third cloud 470. According to various embodiments, the operator who provides service on the first cloud 420 may differ from the operator who provides service on the third cloud 470. According to various embodiments, the cloud connector 428 may relay communication between different clouds (e.g., the first cloud 420 and the third cloud 470). According to various embodiments, the cloud connector 428 may be a hardware device or software module implemented in the first cloud 420. According to various embodiments, the cloud connector 428 may be a hardware device or software module implemented outside the first cloud 420. According to various embodiments, the cloud connector 428 may be a separate server implemented outside the first cloud 420.

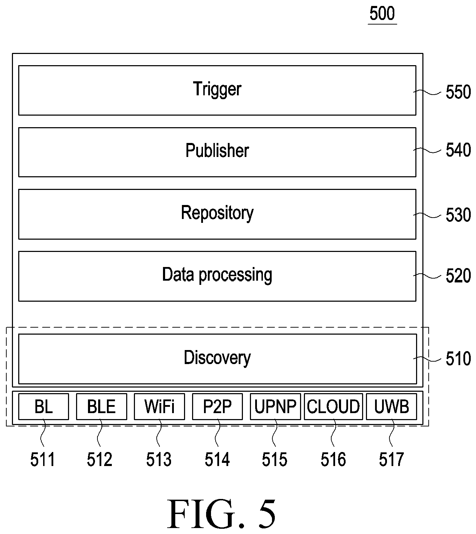

FIG. 5 is a view illustrating of a system architecture according to an embodiment of the disclosure.

Referring to FIG. 5, a system architecture 500 may include a discovery module (discovery) 510, a data processing module (data processing) 520, a repository module (repository) 530, a publisher module (publisher) 540, and a trigger module (trigger) 550. According to various embodiments, an electronic device (e.g., the electronic device 101 of FIG. 1, the electronic device 310 of FIG. 3, and the electronic device 410 of FIG. 4) may execute, in a set order, at least one of the functions of the discovery module 510, the data processing module 520, the repository module 530, the publisher module 540, and the trigger module 550, to connect IoT devices in an IoT environment.

According to various embodiments, the electronic device may scan (or discover) an external electronic device supporting various communication protocols (e.g., BL 511, BLE 512, Wi-Fi 513, P2P 514, UPnP 515, CLOUD 516, and UWB 517) through the discovery module 510. According to various embodiments, the electronic device may transfer the scanning result of the discovery module 510 to the data processing module 520 and may store data about the scanning result in a repository module 812. According to various embodiments, the electronic device may transfer data about the scanning result to the publisher module 540 and the trigger module 550.

According to various embodiments, since the operation of the electronic device to scan the external electronic device consumes a large amount of battery power, the electronic device may stop scanning if a desired device is discovered. According to various embodiments, the electronic device may set a time limit for the operation of scanning the external electronic device. According to various embodiments, when an external electronic device that was connectable to the electronic device moves out of connection coverage, if the electronic device continues to scan the external electronic device, battery consumption and resource waste may occur. According to various embodiments, the electronic device may perform a scan on another external electronic device considering a scan constraint situation of Wi-Fi. For example, in the case of Wi-Fi, the foreground app may scan 4 times at 2-minute intervals and may perform multiple scans in a short time. The background app may perform one scan at a 30-minute interval in total. According to various embodiments , the electronic device may scan another external electronic device considering the scan constraint situation of the communication protocol.

According to various embodiments, since Bluetooth and Wi-Fi use the same frequency band, a collision between Bluetooth and Wi-Fi protocols, or an error or delay may occur when the electronic device scans. According to various embodiments, when the electronic devices simultaneously use the scan resource (or resource) at a specific point in time, some of the electronic devices may not be able to scan a nearby device. According to various embodiments, the electronic device may not be able to scan a device corresponding to a scan type having a short period due to surrounding interference and environment. According to various embodiments, if only BLE-supporting devices are registered in the application (e.g., the application 146 of FIG. 1, the application 315 of FIG. 3, or the application 415 of FIG. 4), the electronic device may consume most of the scan resources in scanning other communication protocols (e.g., Wi-Fi, UPnP, P2P, or BT), thus failing to scan a BLE-supporting device. According to various embodiments, the electronic device may provide efficient discovery scheduling by adjusting the scan time and the order of scan priority in a discovery procedure according to the type of a registered device.

According to various embodiments, the electronic device may identify one or more communication protocols supported per device type registered in the application (or user account) and determine at least one protocol requiring a scan among the plurality of communication protocols based on the device information and current location at the time of starting application driving and scanning. According to various embodiments, the electronic device may adjust (or determine) the scan time or the order of scan priority based on at least one of the device type of the external electronic device, location information about the external electronic device, and the plurality of communication protocols. According to various embodiments, the device type registered in the application (or user account) may be set based on at least one of the product type and product model of the electronic device. For example, the device types registered in the application (or user account) may be at least one of a mobile phone, a tablet, a wearable device, a PC, an accessory device, a TV, audio visual (AV), signage, a refrigerator, a washer, a dryer, an air conditioner, an air purifier, an oven, a range, a microwave, a hood, a robot vacuum, a smart home device, a printer, a headphone, a speaker, a monitor, an E-board, an IoT device, a camera, a camcorder, a cooktop, a dishwasher, a smart watch, a band, a router, a tracker, a car, an air dresser, a speaker, a display, or ear-buds.

According to various embodiments, the electronic device may identify at least one communication protocol supported by at least one external electronic device among the plurality of communication protocols and may adjust a scan time corresponding to a specific communication protocol among the set plurality of communication protocols based on the identified at least one communication protocol. According to various embodiments, a scanning order for the plurality of communication protocols may be predetermined when the application is driven. For example, when the application is driven, the electronic device may scan external electronic devices in the order of BLE, Wi-Fi, P2P, UPnP, CLOUD, UWB, and BT. According to various embodiments, the electronic device may scan the external electronic device based on whether real-time data collection is supported and the number of external electronic devices supporting a specific communication protocol. According to various embodiments, the electronic device may collect data in real-time in the case of Wi-Fi and, when the number of external electronic devices supporting Wi-Fi is smaller than the number of external electronic devices supporting BLE, first scan the external electronic devices supporting BLE. According to various embodiments, the electronic device may collect data in real-time in the case of Wi-Fi and may scan the external electronic device supporting BT first if data cannot be collected in real time in the case of BT.

According to various embodiments, the electronic device may determine a communication protocol to scan based on its own location information and location information about the external electronic device. According to various embodiments, the electronic device may identify (or determine) its location information based on the information collected through Wi-Fi and base station location information, compare current location information about the electronic device with location information about the external electronic device registered in the application, and if the location of the external electronic device and the current location of the electronic device meet a preset condition (e.g., within a radius of 100 meters), scan the external electronic device. According to various embodiments, if the location of the external electronic device and the current location of the electronic device do not meet the preset condition (e.g., within a radius of 100 meters), the electronic device may receive only cloud events. According to various embodiments, when the external electronic device is connected to the same wireless network, the electronic device may determine that the preset condition (e.g., within a radius of 100 meters) is met and scan the external electronic device.

According to various embodiments, the electronic device may identify communication protocols supported per device type registered in the application (or account) and may scan the communication protocols supported by the external electronic device based on the communication protocols supported per device type. According to various embodiments, in the case of an external electronic device having a Nearby attribute, such as a SmartTag, initial scanning is important. Thus, the electronic device may add three more seconds to the BLE scanning time.

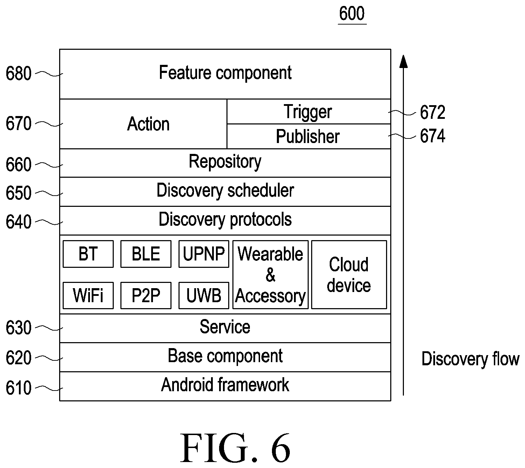

FIG. 6 is a view illustrating a system architecture according to an embodiment of the disclosure.

Referring to FIG. 6, a system architecture 600 may include a framework 610, a base component 620, a service module (service) 630, a discovery protocol module (discovery protocols) 640, a discovery scheduler 650, a repository module (repository) 660, an action module (action) 670, a trigger module (trigger) 672, a publisher module (publisher) 674, and a feature component 680. According to various embodiments, the framework 610 may refer to a Linux-based open source software stack created to be used in various electronic devices. According to various embodiments, the base component 620 may refer to an element necessary for creating IoT-related basic services by simplifying IoT core modular system components and service recycling. According to various embodiments, the service module 630 may refer to a background process for periodically processing scanning and cloud events regardless of the UI. According to various embodiments, the discovery protocol module 640 may provide a discovery (scanning) API, such as BT, BLE, UPnP, Wi-Fi, P2P, UWB, wearable, accessory, and cloud. According to various embodiments, the discovery scheduler 650 may set at least one of an execution period of an application, a scanning time according to a position, and priority. According to various embodiments, the repository module 660 may store the scanning result, and the action module 670 may perform device connection and control. According to various embodiments, when a tag is found nearby or the connection is terminated, the trigger module 672 may automatically upload the location to the server according to the scanning result.

According to various embodiments, the discovery scheduler 650 included in an electronic device (e.g., the electronic device 101 of FIG. 1, the electronic device 310 of FIG. 3, and the electronic device 410 of FIG. 4) for connection between IoT devices in an IoT environment may determine a scanning schedule if the user requests cloud device information when an application starts. According to various embodiments, the discovery scheduler 650 may determine a scanning schedule when the electronic device requests cloud device information upon booting. According to various embodiments, the discovery scheduler 650 may determine a scanning schedule when the external server updates the cloud device information state or receives cloud device information from the external server.

According to various embodiments, the discovery scheduler 650 may scan at least one of the communication protocols (e.g., BT, Wi-Fi, BLE, P2P, UPnP, UWB, wearable & accessory, cloud device) supported by the discovery protocol module 640. According to various embodiments, the repository module 660 may store the scanning (or discovery) result. The scanning (or discovery) result may be transferred to the trigger module 672 and the publisher module 674.

According to various embodiments, the discovery scheduler 650 may perform a scan on the BLE, Wi-Fi, UPnP, P2P, BT, and BLE communication protocols to scan (or search for) external electronic devices located nearby when an application is driven. According to various embodiments, the discovery scheduler 650 may set a scan time limit for the BLE, Wi-Fi, UPnP, P2P, and BT communication protocols. According to various embodiments, the discovery scheduler 650 may set a scan time according to a time period in which an external electronic device may be found based on an advertising speed of the communication protocol. According to various embodiments, the discovery scheduler 650 may terminate the scan (or search) of the communication protocol when the application ends or switches to the background state. According to various embodiments, the discovery scheduler 650 may not terminate the BLE protocol to support a service through a Nearby device.

**Table 1**

| Discovery Scheduler | | | | | | |
|---|---|---|---|---|---|---|
| <- 22s -> | | | | | | |
| <- 1s - > | <- 500ms - > | <- 500ms -> | <- 15s -> | <- 5s -> | <- 2s -> | Maintain BLE scan according to filter and scan option |
| BLE | WIFI AP | UPNP | P2P | WIFI AP Full channel | BT | BLE |

Referring to Table 1, the discovery scheduler 650 may set the scan time for the BLE protocol to 1s (second), set the scan time for Wi-Fi protocol to 500ms, set the scan time for the UPnP protocol to 500ms, set the scan time for the P2P protocol to 15s, and may again set the scan time for the Wi-Fi protocol to 5s, set the scan time for the BT protocol to 2s, and may then maintain the scan on the BLE protocol.

According to various embodiments, when only external electronic devices (e.g., tags) supporting the BLE protocol are registered in the application, the discovery scheduler 650 may perform a scan on the BLE protocol without scanning other communication protocols as shown in Table 2.

**Table 2**

| |
|---|
| Discovery Scheduler |
| BLE (Maintain BLE scan according to filter and scan option) |

According to various embodiments, since the type of the external electronic device is Nearby, the discovery scheduler 650 may start a scan regardless of the location. According to various embodiments, since the Nearby device has an attribute, such as not near you, nearby, and connected state, it is necessary to determine the state of the device in real-time. According to various embodiments, the discovery scheduler 650 may adjust at least one of a scan filter and a scan period (scan duty) according to an application state, such as background, foreground, and screen on/off.

**Table 3**

| | |
|---|---|
| 1. | foreground |
| A. | duty: 100% |
| B. | Scan filter : normal advertisement, request advertisement |
| 2. | background |
| A. | duty : 5% |
| B. | Scan filter : normal advertisement, request advertisement |
| 3. | screen off |
| A. | duty: 1% |
| B. | Scan filter : request advertisement |

Table 3 shows an example in which the discovery scheduler 650 adjusts at least one of the scan filter and the scan duty according to the application state, such as background, foreground, or screen on/off.

According to various embodiments, the discovery scheduler 650 may schedule discovery as shown in Table 4 when an external electronic device supporting BT and BLE protocols is registered in the application. Referring to Table 4, the discovery scheduler 650 may set the scan time for the BLE protocol to 1s, set the scan time for the BT protocol to 2s, and then keep scanning the BLE protocol. According to various embodiments, since an external electronic device, such as an accessory, is a device that may be used anywhere, the discovery scheduler 650 may control to start a BT or BLE protocol scan operation to update the device state and search for the device when the application is driven, regardless of the location.

**Table 4**

| Discovery Scheduler | | |
|---|---|---|
| 1s | 2s | Maintain scan according to BLE option |
| BLE | BT | BLE |

According to various embodiments, the discovery scheduler 650 may schedule discovery as shown in Table 5 when external electronic devices supporting BLE, Wi-Fi, UPnP, P2P, and BT protocols are registered in the application. Referring to Table 5, the discovery scheduler 650 may set the scan time for the BLE protocol to 4s, set the scan time for Wi-Fi protocol to 500ms, set the scan time for the UPnP protocol to 500ms, set the scan time for the P2P protocol to 15s, and may again set the scan time for the Wi-Fi protocol to 5s, set the scan time for the BT protocol to 2s, and may then maintain the scan on the BLE protocol. Referring to Table 5, the discovery scheduler 650 may allocate three seconds more as the scan time for the BLE protocol when a tag that needs to quickly support the Nearby device is registered.

**Table 5**

| Discovery Scheduler | | | | | | |
|---|---|---|---|---|---|---|
| | | | | | | |
| <- 1s+3s - > | <- 500ms -> | <- 500ms -> | <- 15s - > | <- 5s -> | <- 2s -> | Maintain BLE scan according to filter and scan option |
| BLE | WIFI AP | UPNP | P2P | WIFI AP Full channel | BT | BLE |

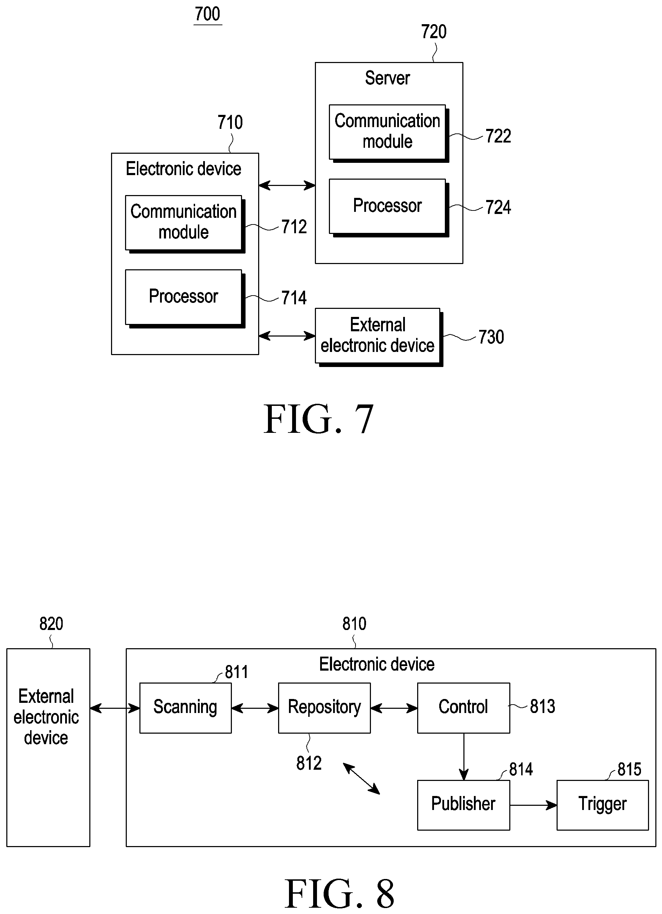

FIG. 7 is a view illustrating an electronic device scanning an external electronic device according to an embodiment of the disclosure.

Referring to FIG. 7, an IoT system 700 includes an electronic device 710 (e.g., the electronic device 101 of FIG. 1, the electronic device 310 of FIG. 3, or the electronic device 410 of FIG. 4), a server 720, and an external electronic device 730 (e.g., the cloud-connected devices 330 of FIG. 3, and the cloud-connected devices 430 of FIG. 4). According to various embodiments, the server 720 may be implemented in the cloud 320 of FIG. 3 or the first cloud 420 of FIG. 4. According to various embodiments, the electronic device 710 may include a communication module 712 that communicates with the server 720 or the external electronic device 730 and a processor 714 that controls the overall operation of the electronic device 710. According to various embodiments, the server 720 may include a communication module 722 that communicates with the electronic device 710 or the external electronic device 730 and a processor 724 that controls the overall operation of the server 720. According to various embodiments, the external electronic device 730 may include one or more external electronic devices.

According to various embodiments, when an application stored in the electronic device 710 is executed, the processor 714 included in the electronic device 710 may identify at least one external electronic device 730 registered in the application. According to various embodiments, the processor 714 may identify at least one communication protocol supported by at least one external electronic device 730 among the set plurality of communication protocols and may adjust a scan time corresponding to a first communication protocol among the set plurality of communication protocols based on the identified at least one communication protocol. According to various embodiments, the processor 714 may set an order of scan priority for the plurality of communication protocols based on the at least one communication protocol and location information about the electronic device 710. According to various embodiments, the processor 714 may adjust the scan time corresponding to the first communication protocol based on the order of scan priority and may adjust the scan time corresponding to the second communication protocol among the plurality of communication protocols based on the order of scan priority. According to various embodiments, the processor 714 may exclude a third communication protocol among the plurality of communication protocols from the scan targets based on the order of scan priority. According to various embodiments, the processor 714 may start or end a scan on a communication protocol based on a life cycle (e.g., background, foreground) of the application. According to various embodiments, the application may be an Internet of Things (IoT) application that identifies the state of the at least one external electronic device and controls the operation of the at least one external electronic device. According to various embodiments, the scanning order of the plurality of set communication protocols may be predetermined. According to various embodiments, each of the plurality of communication protocols may be Bluetooth (BT), Bluetooth low energy (BLE), Wi-Fi, peer-to-peer (P2P) network, universal plug and play (UPnP), Cloud, or ultra-wideband (UWB).

According to various embodiments, the processor 714 may exclude, from the scan targets, external electronic devices, which are away from the electronic device 710 by a preset threshold distance or more, among the at least one external electronic device 730 based on the location information about the at least one external electronic device 730 and the location information about the electronic device 710. According to various embodiments, the processor 714 may set an order of scan priority for the plurality of communication protocols based on the at least one communication protocol and change the scanning order of the first communication protocol and the second communication protocol among the plurality of communication protocols based on the order of scan priority. According to various embodiments, the processor 714 may exclude a third communication protocol among the plurality of communication protocols from the scan targets based on the order of scan priority. According to various embodiments, the processor 714 may control to receive, from the server 720, type information and location information about the at least one external electronic device 730 registered in the application. According to various embodiments, the processor 714 may control to transmit information regarding the determined order of scan priority to the server 720.

FIG. 8 is a view illustrating a discovery flow of an electronic device according to an embodiment of the disclosure.

Referring to FIG. 8, an electronic device 810 may include a scanning module (scanning) 811, a repository module (repository) 812, a control module (control) 813, a publisher module (publisher) 814, and a trigger module (trigger) 815, for a discovery flow. According to various embodiments, the electronic device 810 may scan an external electronic device 820 through the scanning module 811 based on at least one of the device type of the external electronic device 820 registered in the application (or user account), the communication protocol supported by the external electronic device 820, the location information about the electronic device 810, and the location information about the external electronic device 820. According to various embodiments, the electronic device 810 may store the scanning result of the scanning module 811 in the repository module 812 and transfer the scanning result to the control module 813 and the publisher module 814. According to various embodiments, the scanning result may be transferred to the trigger module 815 through the publisher module 814. According to various embodiments, the scanning result may be transferred to the user interface (UI), a device panel, or the device plugin through the publisher module 814.

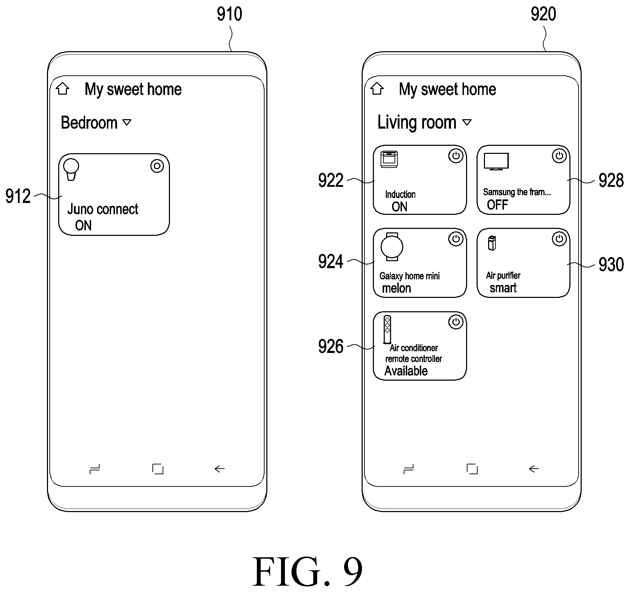

FIG. 9 is a view illustrating a user interface of an electronic device according to an embodiment of the disclosure.

Referring to FIG. 9, an application stored (or installed) in an electronic device (e.g., the electronic device 101 of FIG. 1, the electronic device 310 of FIG. 3, the electronic device 410 of FIG. 4, or the electronic device 710 of FIG. 7) may differently display the external electronic device that may be controlled based on the location of the electronic device. According to various embodiments, in a screen 910 for the case where the electronic device is in the bed room, the electronic device may scan an external electronic device 912 (e.g., a light) located in the bed room and may be connected to the external electronic device to control the operation of the external electronic device according to the scanning result. According to various embodiments, in a screen 920 for the case where the electronic device is in the living room, the electronic device may scan a plurality of external electronic devices (e.g., an induction 922, a smartwatch 924, an air conditioner 926, a TV 928, and an air purifier 930) located in the living room and be connected to at least one external electronic device among the plurality of external electronic devices to control the operation of the at least one external electronic device according to the scanning result.

According to various embodiments, the electronic device may determine its location and the location of the external electronic device based on the information provided from Wi-Fi and the base station (e.g., accuracy of location through Wi-Fi and the base station is about 100 meters). According to various embodiments, if the external electronic device is located within a radius of 100m, or the external electronic device is connected over the same wireless network as that of the electronic device, the electronic device may determine that the external electronic device is a scan target. For example, the electronic device may identify that the light (e.g., ABL light) which is a scan target registered with the bed room is a device supporting only BLE short-range communication and may perform only a BLE scan in the bed room. For example, the electronic device may identify that external electronic devices which are scan targets registered with the living room are devices supporting four types of short-range communication, such as Wi-Fi, P2P, BLE, and BT, and perform a scan in the order of BLE, Wi-Fi, P2P, and BT according to the order of scan priority.

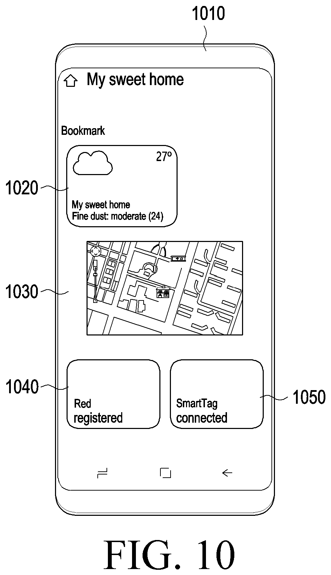

FIG. 10 is a view illustrating a user interface of an electronic device according to an embodiment of the disclosure.

Referring to FIG. 10, an application stored (or installed) in an electronic device (e.g., the electronic device 101 of FIG. 1, the electronic device 310 of FIG. 3, the electronic device 410 of FIG. 4, or the electronic device 710 of FIG. 7) may display, through a user interface 1010, weather information 1020, location information 1030, information 1040 regarding registered external electronic devices, and information 1050 regarding a connected external electronic device. According to various embodiments, if the electronic device need not perform short-range communication, the electronic device may process a CLOUD-related event. According to various embodiments, the electronic device may identify the external electronic device registered in the application and change the scanning duty according to the state of the electronic device.

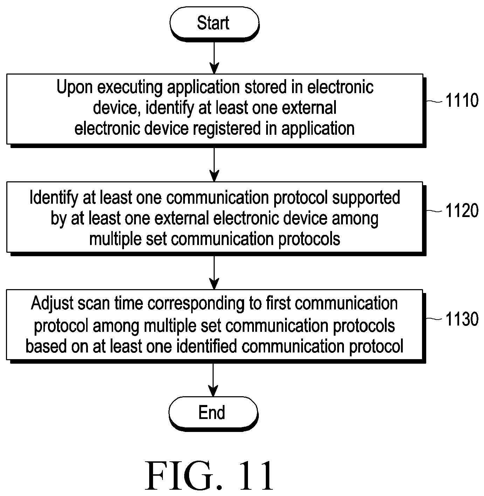

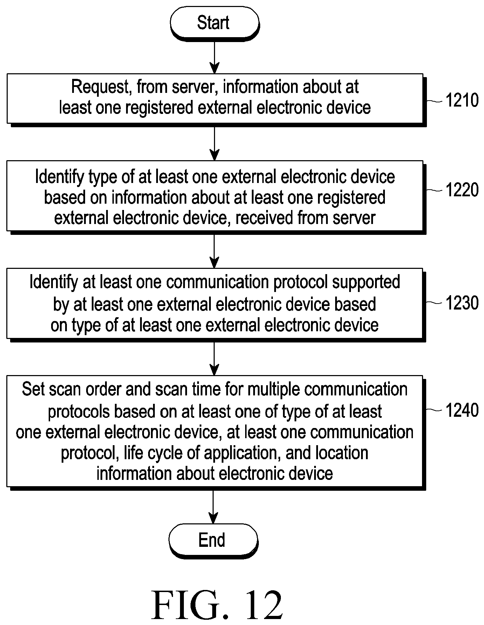

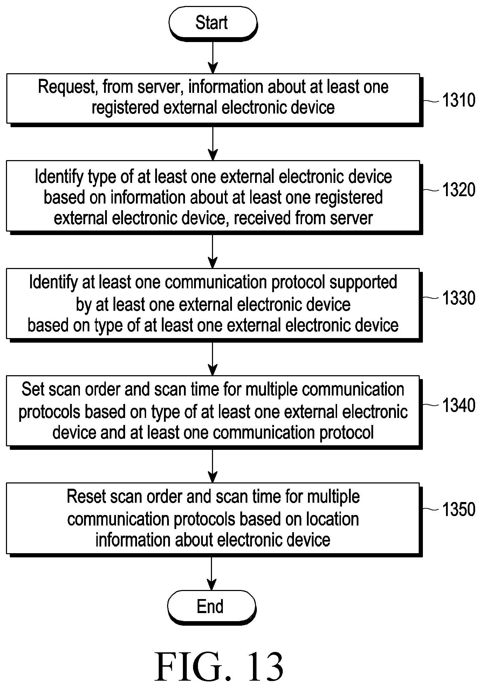

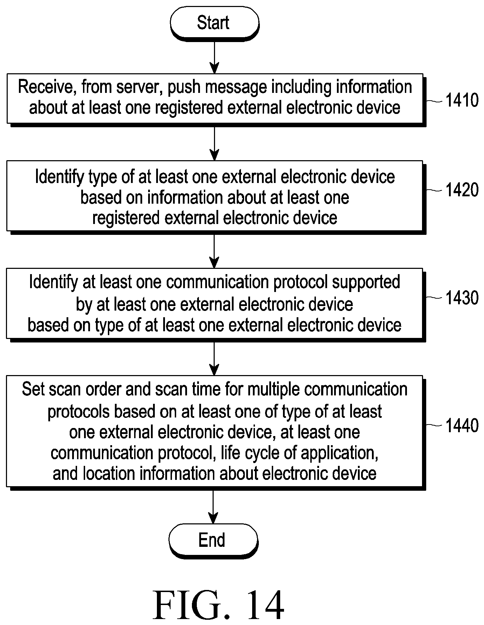

FIGS. 11 to 14 are views illustrating an operation method of an electronic device according to various embodiments. FIG. 11 relates to an embodiment in which the electronic device directly identifies at least one external electronic device when an application is executed. FIGS. 12 to 14 relate to embodiments in which the electronic device receives information about at least one external electronic device from a server. In FIGS. 12 and 13, the electronic device may directly request information about at least one registered external electronic device from the server. In FIG. 14, the electronic device may receive, from the server, a push message including information about at least one registered external electronic device without requesting information from the server.

FIG. 11 is a view illustrating an operation method of an electronic device according to an embodiment of the disclosure.

Referring to FIG. 11, an electronic device (e.g., the electronic device 101 of FIG. 1, the electronic device 310 of FIG. 3, the electronic device 410 of FIG. 4, or the electronic device 710 of FIG. 7) may scan external electronic devices (e.g., the cloud-connected devices 330 of FIG. 3, the cloud-connected devices 430 of FIG. 4, and the external electronic device 730 of FIG. 7). In operation 1110, the electronic device may identify at least one external electronic device registered in the application upon executing an application stored in the electronic device. In operation 1120, the electronic device may identify at least one communication protocol supported by the at least one external electronic device among a plurality of set communication protocols. In operation 1130, the electronic device may adjust the scan time corresponding to the first communication protocol among the plurality of set communication protocols based on the at least one identified communication protocol.

FIG. 12 is a view illustrating an operation method of an electronic device according to an embodiment of the disclosure.

Referring to FIG. 12, an electronic device (e.g., the electronic device 101 of FIG. 1, the electronic device 310 of FIG. 3, the electronic device 410 of FIG. 4, or the electronic device 710 of FIG. 7) may scan external electronic devices (e.g., the cloud-connected devices 330 of FIG. 3, the cloud-connected devices 430 of FIG. 4, and the external electronic device 730 of FIG. 7). In operation 1210, the electronic device may request information about at least one external electronic device registered in the application or server, from the server. In operation 1220, the electronic device may identify the type of the at least one external electronic device based on the information about the at least one registered external electronic device received from the server. According to various embodiments, the type of the external electronic device may be set based on at least one of the product model (e.g., TV model name or mobile phone model name) and product classification of the external electronic device. According to various embodiments, the communication protocol supported by the at least one external electronic device may be differently set depending on at least one of the product model and product classification of the external electronic device. According to various embodiments, a device type index may be pre-defined according to at least one of the product model and product classification of the external electronic device. According to various embodiments, the electronic device may previously store or receive, from the server, information regarding the device type index defined according to at least one of the product model and product classification of the external electronic device. According to various embodiments, the information regarding the device type index may be included in the at least one registered external electronic device received from the server by the electronic device.

For example, the types of external electronic devices may be at least one of a mobile phone, a tablet, a wearable device, a PC, an accessory device, a TV, an audio visual (AV), a signage, a refrigerator, a washer, a dryer, an air conditioner, an air purifier, an oven, a range, a microwave, a hood, a robot vacuum, a smart home device, a printer, a headphone, a speaker, a monitor, an E-board, an IoT device, a camera, a camcorder, a cooktop, a dishwasher, a smart watch, a band, a router, a tracker, a car, an air dresser, a speaker, a display, or ear-buds. For example, the type of the external electronic device may be one of a first version of a mobile phone, a second version of a mobile phone, and a third version of a mobile phone. For example, if the type of the external electronic device is a mobile phone, the device type index may be defined as "1", if the type of the external electronic device is a tablet, the device type index may be defined as "2", and if the type of the external electronic device is a wearable device, the device type index may be defined as "3". For example, if the type of the external electronic device is a mobile phone and the mobile phone model is the first version, the device type index may be defined as "1", if the type of the external electronic device is a mobile phone and the mobile phone model is the second version, the device type index may be defined as "2", and if the type of the external electronic device is a tablet, the device type index may be defined as "3".

In operation 1230, the electronic device may identify at least one communication protocol supported by the at least one external electronic device based on the type of the at least one external electronic device. In operation 1240, the electronic device may set the scanning order and scan time for the plurality of communication protocols based on at least one of the type of the at least one external electronic device, the at least one communication protocol, the life cycle of the application, and location information about the electronic device.

FIG. 13 is a view illustrating an operation method of an electronic device according to an embodiment of the disclosure.

Referring to FIG. 13, an electronic device (e.g., the electronic device 101 of FIG. 1, the electronic device 310 of FIG. 3, the electronic device 410 of FIG. 4, or the electronic device 710 of FIG. 7) may scan external electronic devices (e.g., the cloud-connected devices 330 of FIG. 3, the cloud-connected devices 430 of FIG. 4, and the external electronic device 730 of FIG. 7). In operation 1310, the electronic device may request information about at least one external electronic device registered in the application or server, from the server. In operation 1320, the electronic device may identify the type of the at least one external electronic device based on the information about the at least one registered external electronic device received from the server. In operation 1330, the electronic device may identify at least one communication protocol supported by the at least one external electronic device based on the type of the at least one external electronic device. In operation 1340, the electronic device may set the scanning order and scan time for the plurality of communication protocols based on the type of the at least one external electronic device and the at least one communication protocol. In operation 1350, the electronic device may reset the scanning order and scan time for the plurality of communication protocols based on the location information about the electronic device.

FIG. 14 is a view illustrating an operation method of an electronic device according to an embodiment of the disclosure.

Referring to FIG. 14, an electronic device (e.g., the electronic device 101 of FIG. 1, the electronic device 310 of FIG. 3, the electronic device 410 of FIG. 4, or the electronic device 710 of FIG. 7) may scan external electronic devices (e.g., the cloud-connected devices 330 of FIG. 3, the cloud-connected devices 430 of FIG. 4, and the external electronic device 730 of FIG. 7). In operation 1410, the electronic device may receive, from the server, a push message including information about at least one registered external electronic device. In operation 1420, the electronic device may identify the type of the at least one external electronic device based on the information about the at least one registered external electronic device. In operation 1430, the electronic device may identify at least one communication protocol supported by the at least one external electronic device based on the type of the at least one external electronic device. In operation 1440, the electronic device may set the scanning order and scan time for the plurality of communication protocols based on at least one of the type of the at least one external electronic device, the at least one communication protocol, the life cycle of the application, and location information about the electronic device.

## Claims

1. An electronic device (101) comprising:
memory (130) storing instructions;
a communication module (190); and
at least one processor (120) connected to the communication module (190),
wherein the instructions, when executed by the at least one processor (120), cause the electronic device (101) to:
upon executing an application stored in the electronic device (101), identify (1110, 1320) a type of each of at least one external electronic device (102, 104) registered in the application,
identify (1120, 1330) at least one communication protocol supported by the at least one external electronic device (102, 104) among a plurality of communication protocols based on the type of each of the at least one external electronic device (102, 104), and
set (1130, 1340) a scan order and scan duration for the plurality of communication protocols based on the type of each of the at least one external electronic device (102, 104) and the at least one communication protocol.

2. The electronic device (101) of claim 1, wherein the instructions, when executed by the at least one processor, cause the electronic device to exclude a third communication protocol among the plurality of communication protocols from a scan target based on the order of scan priority.

3. The electronic device (101) of claim 1, wherein the instructions, when executed by the at least one processor, cause the electronic device to start or end a scan on a communication protocol based on a life cycle of the application.

4. The electronic device (101) of claim 1, wherein the instructions, when executed by the at least one processor, cause the electronic device to:
exclude, from a scan target, an external electronic device (102, 104), which is away from the electronic device (101) by a preset threshold distance or more, among the at least one external electronic device (102, 104), based on location information about the electronic device (101) and location information about the at least one external electronic device (102, 104).

5. The electronic device (101) of claim 1, wherein the instructions, when executed by the at least one processor, cause the electronic device to receive, from a server, at least one of location information or type information about the at least one external electronic device (102, 104) registered in the application.

6. The electronic device (101) of claim 1, wherein the application is an Internet of things, IoT, application that identifies a state of the at least one external electronic device (102, 104) and controls an operation of the at least one external electronic device (102, 104).

7. The electronic device (101) of claim 1, wherein each of the plurality of communication protocols is Bluetooth, BT, Bluetooth low energy, BLE, Wi-Fi, peer-to-peer, P2P, network, universal plug and play, UPnP, CLOUD, or ultra-wideband, UWB.

8. A method for operating an electronic device (101) scanning for an external electronic device (102, 104), the method comprising:
upon executing an application stored in the electronic device (101), identifying (1110, 1320) a type of each of at least one external electronic device (102, 104) registered in the application;
identifying (1120, 1330) at least one communication protocol supported by the at least one external electronic device (102, 104) among a plurality of communication protocols based on the type of each of the at least one external electronic device (102, 104); and
setting (1130, 1340) a scan order and a scan duration for the plurality of communication protocols based on the type of each of the at least one external electronic device (102, 104) and the at least one communication protocol.

9. The method of claim 8, further comprising excluding a third communication protocol among the plurality of communication protocols from a scan target based on the order of scan priority.

10. The method of claim 8, further comprising starting or ending a scan on a communication protocol based on a life cycle of the application.

## Patentansprüche

1. Elektronische Einrichtung (101), umfassend:
Speicher (130) zum Speichern von Befehlen;
ein Kommunikationsmodul (190); und
mindestens einen Prozessor (120), der mit dem Kommunikationsmodul (190) verbunden ist,
wobei die Befehle bei ihrer Ausführung durch den mindestens einen Prozessor (120) die elektronische Einrichtung (101) dazu veranlassen:
beim Ausführen einer in der elektronischen Einrichtung (101) gespeicherten Applikation einen Typ jeder von mindestens einer externen elektronischen Einrichtung (102, 104), die in der Applikation registriert ist, zu identifizieren (1110, 1320),
mindestens ein Kommunikationsprotokoll, das von der mindestens einen externen elektronischen Einrichtung (102, 104) unterstützt wird, aus einer Vielzahl von Kommunikationsprotokollen basierend auf dem Typ jeder der mindestens einen externen elektronischen Einrichtung (102, 104) zu identifizieren (1120, 1330), und
eine Abtastfolge und Abtastdauer für die Vielzahl von Kommunikationsprotokollen basierend auf dem Typ jeder der mindestens einen externen elektronischen Einrichtung (102, 104) und dem mindestens einen Kommunikationsprotokoll einzustellen (1130, 1340).

2. Elektronische Einrichtung (101) nach Anspruch 1, wobei die Befehle bei ihrer Ausführung durch den mindestens einen Prozessor die elektronische Einrichtung dazu veranlassen, ein drittes Kommunikationsprotokoll aus der Vielzahl von Kommunikationsprotokollen von einem Abtastziel basierend auf der Reihenfolge der Abtastpriorität auszuschließen.

3. Elektronische Einrichtung (101) nach Anspruch 1, wobei die Befehle bei ihrer Ausführung durch den mindestens einen Prozessor die elektronische Einrichtung dazu veranlassen, mit einer Abtastung eines Kommunikationsprotokolls basierend auf einem Lebenszyklus der Applikation zu beginnen oder diese zu beenden.

4. Elektronische Einrichtung (101) nach Anspruch 1, wobei die Befehle bei ihrer Ausführung durch den mindestens einen Prozessor die elektronische Einrichtung dazu veranlassen:
eine externe elektronische Einrichtung (102, 104), die von der elektronischen Einrichtung (101) um einen vorgegebenen Grenzabstand oder noch weiter entfernt ist, unter der mindestens einen externen elektronischen Einrichtung (102, 104) von einem Abtastziel auszuschließen, basierend auf Standortinformationen über die elektronische Einrichtung (101) und Standortinformationen über die mindestens eine externe elektronische Einrichtung (102, 104).

5. Elektronische Einrichtung (101) nach Anspruch 1, wobei die Befehle bei ihrer Ausführung durch den mindestens einen Prozessor die elektronische Einrichtung dazu veranlassen, von einem Server mindestens eine der Standortinformationen und/oder Typinformationen über die mindestens eine externe elektronische Einrichtung (102, 104), die in der Applikation registriert ist, zu empfangen.

6. Elektronische Einrichtung (101) nach Anspruch 1, wobei die Applikation eine Internetder-Dinge-Applikation (IoT-Applikation) ist, die einen Zustand der mindestens einen externen elektronischen Einrichtung (102, 104) identifiziert und einen Betrieb der mindestens einen externen elektronischen Einrichtung (102, 104) steuert.

7. Elektronische Einrichtung (101) nach Anspruch 1, wobei jedes der Vielzahl von Kommunikationsprotokollen Bluetooth (BT), Bluetooth-Low-Energy (BLE), Wi-Fi, Peer-to-Peer (P2P), Netzwerk, Universal-Plug-and-Play (UpnP), CLOUD oder Ultrabreitband (UWB) ist.

8. Verfahren zum Betreiben einer elektronischen Einrichtung (101) zum Abtasten nach einer externen elektronischen Einrichtung (102, 104), das Folgendes umfasst:
Identifizieren (1110, 1320) eines Typs jeder von mindestens einer externen elektronischen Einrichtung (102, 104), die in der Applikation registriert ist, beim Ausführen einer in der elektronischen Einrichtung (101) gespeicherten Applikation;
Identifizieren (1120, 1330) mindestens eines Kommunikationsprotokolls, das von der mindestens einen externen elektronischen Einrichtung (102, 104) unterstützt wird, aus einer Vielzahl von Kommunikationsprotokollen basierend auf dem Typ jeder der mindestens einen externen elektronischen Einrichtung (102, 104); und
Einstellen (1130, 1340) einer Abtastfolge und einer Abtastdauer für die Vielzahl von Kommunikationsprotokollen basierend auf dem Typ jeder der mindestens einen externen elektronischen Einrichtung (102, 104) und dem mindestens einen Kommunikationsprotokoll.

9. Verfahren nach Anspruch 8, das ferner das Ausschließen eines dritten Kommunikationsprotokolls aus der Vielzahl von Kommunikationsprotokollen von einem Abtastziel basierend auf der Reihenfolge der Abtastpriorität umfasst.

10. Verfahren nach Anspruch 8, das ferner das Beginnen oder das Beenden einer Abtastung eines Kommunikationsprotokolls basierend auf einem Lebenszyklus der Applikation umfasst.

## Revendications

1. Dispositif électronique (101) comprenant :
une mémoire (130) stockant des instructions ;
un module de communication (190) ; et
au moins un processeur (120) connecté au module de communication (190),
dans lequel les instructions, lorsqu'exécutées par le au moins un processeur (120), amènent le dispositif électronique (101) à :
lors de l'exécution d'une application stockée dans le dispositif électronique (101), identifier (1110, 1320) le type de chacun des au moins un dispositif électronique externe (102, 104) enregistré dans l'application,
identifier (1120, 1330) au moins un protocole de communication pris en charge par le au moins un dispositif électronique externe (102, 104) parmi une pluralité de protocoles de communication basés sur le type de chacun des au moins un dispositif électronique externe (102, 104), et
définir (1130, 1340) un ordre de balayage et une durée de balayage pour la pluralité de protocoles de communication basés sur le type de chacun des au moins un dispositif électronique externe (102, 104) et le au moins un protocole de communication.

2. Dispositif électronique (101) selon la revendication 1, dans lequel les instructions, lorsqu'exécutées par le au moins un processeur, amènent le dispositif électronique à exclure un troisième protocole de communication parmi une pluralité de protocoles de communication d'une cible de balayage basée sur l'ordre de priorité de balayage.

3. Dispositif électronique (101) selon la revendication 1, dans lequel les instructions, lorsqu'exécutées par le au moins un processeur, amènent le dispositif électronique à débuter ou terminer un balayage sur un protocole de communication basé sur un cycle de vie de l'application.

4. Dispositif électronique (101) selon la revendication 1, dans lequel les instructions, lorsqu'exécutées par le au moins un processeur, amènent le dispositif électronique à :
exclure, d'une cible de balayage, un dispositif électronique externe (102, 104), qui est distal du dispositif électronique (101) par une distance seuil prédéfinie ou plus, parmi le au moins un dispositif électronique externe (102, 104), basé sur une information de localisation concernant le dispositif électronique (101) et l'information de localisation concernant le au moins un dispositif électronique externe (102, 104).

5. Dispositif électronique (101) selon la revendication 1, dans lequel les instructions, lorsqu'exécutées par le au moins un processeur, amènent le dispositif électronique à recevoir, depuis un serveur, au moins une information de localisation ou information de type concernant le au moins un dispositif électronique externe (102, 104) enregistré dans l'application.

6. Dispositif électronique (101) selon la revendication 1, dans lequel l'application est une application Internet des Objets, IDO, qui identifie un état du au moins un dispositif électronique externe (102, 104) et commande une opération du au moins un dispositif électronique externe (102, 104).

7. Dispositif électronique (101) selon la revendication 1, dans lequel chacun de la pluralité des protocoles de communication est Bluetooth, BT, Bluetooth basse consommation (Bluetooth low energy), BLE, Wi-Fi, peer-to-peer, P2P, network, universal plug and play, UPnP, CLOUD, ou bande ultra-large (ultra-wideband), UWB.

8. Procédé pour faire fonctionner un balayage de dispositif électronique (101) pour un dispositif électronique externe (102, 104), le procédé comprenant :
lors de l'exécution d'une application stockée dans le dispositif électronique (101), identifier (1110, 1320) le type de chacun des au moins un dispositif électronique externe (102, 104) enregistré dans l'application ;
identifier (1120, 1330) au moins un protocole de communication pris en charge par le au moins un dispositif électronique externe (102, 104) parmi une pluralité de protocoles de communication basés sur le type de chacun des au moins un dispositif électronique externe (102, 104) ; et
définir (1130, 1340) un ordre de balayage et une durée de balayage pour la pluralité de protocoles de communication basés sur le type de chacun des au moins un dispositif électronique externe (102, 104) et le au moins un protocole de communication.

9. Procédé selon la revendication 8, comprenant en outre exclure un troisième protocole de communication parmi la pluralité de protocoles de communication d'une cible de balayage basée sur l'ordre de priorité de balayage.

10. Procédé selon la revendication 8, comprenant en outre débuter ou terminer un balayage sur un protocole de communication basé sur un cycle de vie de l'application.
